# EUROPÄISCHE PATENTSCHRIFT

(11) **EP 2 106 344 B1**
(45) Veröffentlichungstag und Bekanntmachung des Hinweises auf die Patenterteilung: **27.10.2010**
(21) Anmeldenummer: 07785709.2
(22) Anmeldetag: 21.08.2007
(51) Int. Cl.: B32B 27/14, B23C 5/20

(54) **SCHNEIDEINSATZ**
CUTTING INSERT
OUTIL DE COUPE RAPPORTÉ

(30) Priorität: 16.12.2006 DE 202006018992 U
(43) Veröffentlichungstag der Anmeldung: 07.10.2009
(73) Patentinhaber: Kennametal Inc., Latrobe, PA 15650-0231 (US)
(72) Erfinder: KÖRNER, Lothar, 44801 Bochum (DE); SCHWANER, Carsten, 45470 Mülheim a. d. Ruhr (DE); HAHN, Uwe, 46147 Oberhausen (DE)
(74) Vertreter: Vomberg, Friedhelm
(86) Internationale Anmeldenummer: PCT/DE2007/001480
(87) Internationale Veröffentlichungsnummer: WO 2008/074278

(56) Entgegenhaltungen:
- DE-A1- 4 437 093
- US-A- 5 630 681

## Beschreibung

Die Erfindung betrifft einen Schneideinsatz für die spanbildende Bearbeitung dessen mindestens einseitige Deckfläche die Spanfläche und dessen umlaufende, im rechten Winkel zueinander stehenden, ebenen Seitenflächen die Freiflächen bilden, wobei die Spanfläche nach einem an die Freiflächen angrenzenden, unter einem Spanwinkel von 0° angeordneten, ebenen Spanflächenabschnitt, über abfallende ebene Wandabschnitte in einen tiefer liegenden, ebenen Spanformgrund ausläuft und zur Mitte hin über ansteigende ebene Wandabschnitte zu einem zentral gelegenen, ebenen Spanflächenplateau ansteigt.

Ein solcher Schneideinsatz ist aufgrund seiner Schneidkantengeometrie insbesondere für die Schwerzerspanung geeignet, d.h. für große Schnitttiefen und hohe Vorschübe. Der zunächst über eine bestimmte Distanz unter einem Spanwinkel von 0° sich an die Freiflächen anschließende Spanflächenabschnitt wirkt einem vorzeitigen Verschleiß der Schneidkante auch bei hohen Anforderungen entgegen.

Vergleichbare Spanflächengeometrien werden in der DE 42 39 236 A1 offenbart. Nach einem an die Freifläche angrenzenden, kurzen ebenen Stück fällt die Spanfläche über geneigte oder konkav gekrümmte Flächen zunächst auf ein tieferes Niveau ab, um sich zur Mitte hin zu einem Spanflächenplateau zu erheben. Eine auf diese Weise hinter der Schneidkante gebildete Mulde soll einen günstigen Spanablauf und einen zuverlässigen Spanbruch bewirken. Zur Verbesserung der Spanführung wird in der DE 42 39 236 A1 vorgeschlagen, erhabene Spanformelemente auszubilden, die sich längsrippenförmig, im Wesentlichen in Spanablaufrichtung über die Spanbrechermulde erstrecken.

Einen weiteren Schneideinsatz mit längsrippenförmigen erhabenen Spanformelementen beschreibt die DE 44 37 093 A1, wobei die Spanformelemente im Wesentlichen im abfallenden Bereich der Spanbrechermulde angeordnet und zum Spanflächenplateau beabstandet sind. Diese Spanflächengeometrie soll beim Zerspanen eine Formung des ablaufenden Spanes unmittelbar im schneidkantennahen Bereich bewirken, ohne dass der Schneideinsatz selbst durch den ablaufenden Span stark belastet wird.

Aufgabe der vorliegenden Erfindung ist es, einen Schneideinsatz der eingangs beschriebenen Art derart weiterzuentwickeln, dass eine gezielte Spanformung über den gesamten Einsatzbereich gewährleistet wird.

Diese Aufgabe wird gelöst durch einen Schneideinsatz mit den Merkmalen nach Anspruch 1, bei dem erfindungsgemäß mehrere erhabene Spanformelemente parallel und im gleichen Abstand zueinander an zwei sich gegenüberliegenden, ansteigenden Wandabschnitten des Spanflächenplateaus angeordnet sind, die eine zum Spanformgrund abfallende Dachfläche und abfallende Flanken aufweisen.

Konkrete Ausführungsformen der Erfindung werden in den Unteransprüchen beschrieben.

Bei dem erfindungsgemäßen rechteckigen Schneideinsatz sind das Spanflächenplateau und die Spanformelemente spiegelsymmetrisch in Bezug auf die jeweiligen Schneidkanten-Mittelsenkrechten angeordnet. Die Länge und die Breite des Spanflächenplateaus sind auf den jeweiligen Einsatzbereich des Schneideinsatzes abgestimmt. Vorzugsweise bildet das Spanflächeplateau einen rechteckigen Mittelsteg, mit zwei sich jeweils gegenüber liegenden kurzen und zwei langen Seiten. Weiterhin bevorzugt weisen die kurzen Seiten einen geringeren Abstand zu der jeweiligen Schneidkante auf als die langen Seiten, so dass der Spanformgrund vor den Längsseiten eine größere Breite besitzt. In den Spanformgrund mit der größeren Breite ragen die dem Spanflächenplateau vorgelagerten erhabenen Spanformelemente hinein.

Das Spanflächenplateau liegt auf Schneidkantenhöhe oder darüber, d.h., dass das Spanflächenplateau die Ebene, in der die Schneidkanten liegen, überragen kann. Vorzugsweise setzen die auf den tiefer liegenden Spanformgrund auslaufenden, abfallenden Dachflächen der Spanformelemente unterhalb der Ebene des Spanflächenplateaus an, so dass sie je nach Höhe des Spanflächenplateaus vollständig oder zumindest teilweise unterhalb der Schneidkantenebene liegen. Die abfallenden Dachflächen der Spanformelemente bilden Rampen, die eine geringere und/oder in Teilbereichen die gleiche Neigung aufweisen als die geneigten Wandabschnitte des Spanflächenplateaus, denen sie vorgelagert sind, wobei die geneigten Wandabschnitte des Spanflächenplateaus gegenüber dem Spanformgrund in einem Winkel von 20° bis 40°, vorzugsweise in einem Winkel von 30°, geneigt sind. Der Neigungswinkel der Dachflächen der Spanformelemente beträgt zumindest in einem Teilbereich vorzugsweise ≤ 15°.

In einer bevorzugten Ausführungsform ist vorgesehen, dass die Anzahl der Spanformelemente zwischen 3 und 11 pro Seite beträgt. Die Anzahl der Spanformelemente kann auch geradzahlig sein.

Bevorzugt sind auch die im Abstand zu den Schneidkanten angeordneten, abfallenden ebenen Wandabschnitte in einem Winkel von 20° bis 40°, vorzugsweise in einem Winkel von 30°, gegenüber dem Spanformgrund geneigt.

Nach einer bevorzugten Ausführungsform ist der Spanformgrund um 0,4 mm bis 0,6 mm, vorzugsweise um 0,5 mm, gegenüber dem unter einem Spanwinkel von 0° angeordneten, ebenen Spanflächenabschnitt, welcher eine Breite von 0,5 mm bis 1,5 mm aufweist, abgesenkt und verläuft hierzu parallel. Die in den Spanformgrund hineinragenden erhabenen Spanformelemente erstrecken sich maximal bis zur Mitte der Spanformgrundfläche. Als besonders vorteilhaft hat sich die Ausführungsform erwiesen, bei der sich die Spanformelemente lediglich über ein Viertel der Breite der Spanformgrundfläche erstrecken. Die Breite der Dachfläche eines Spanformelementes ist im Wesentlichen über seine gesamte Länge gleich bleibend und beträgt 1,0 mm bis 2,5 mm, vorzugsweise 1,65 mm. Die größte Gesamtbreite W der Spanformelemente liegt zwischen 1,5 mm und 4,5 mm. Der Abstand der Spanformelemente zueinander beträgt das 0,75-fache bis 1,5-fache der Breite der Dachfläche, vorzugsweise 4,35 mm, d.h. 6,0 mm von Mitte Dachfläche zur Mitte der benachbarten Dachfläche. Die Dachflächenbreite kann sich jedoch auch zur Oberseite des Spanflächenplateaus hin verjüngen, wobei die Verjüngung auch sprunghaft erfolgen kann, so dass sich ein Absatz ausbildet. Der Abstand zwischen dem kurzen Wandabschnitt und dem Anfang des ersten Spanformelements sollte in einer bevorzugten Ausführungsform ca. das 0,75-fache bis 2-fache der Spanformelementenbreite betragen. Ferner sollte die Höhe der Spanformelemente vom Spangrund bis zum Ende der Spanformelemente zwischen 0,45 und 1,25 mm betragen.

Vorzugsweise sind sämtliche Kanten der Spanfläche, sowohl Außen- als auch Innenkanten, gerundet, um die Kanten verschleißresistenter zu gestalten. Des Weiteren wird zur Stabilisierung der Schneidkante eine entlang der Schneidkante angeordnete, umlaufende Fase vorgeschlagen. Bevorzugt beträgt die Breite der Fase in der Spanflächenebene 0,4 mm bis 0,6 mm, vorzugsweise 0,5 mm, und ist gegenüber dem unter einem Spanwinkel von 0° angeordneten Spanflächenabschnitt in einem Winkel von 10° bis 20°, vorzugsweise 15°, geneigt. Die Fase wirkt somit ebenfalls einem vorzeitigen Verschleiß des Schneideinsatzes entgegen.

Das aus horizontalen und geneigten Flächen zusammengesetzte Spanflächenprofil sowie die erfindungsgemäße Anordnung der Spanformelemente beeinflussen den Spanablauf in der Weise, dass eine gezielte Spanformung über den gesamten Einsatzbereich gewährleistet ist.

Eine konkrete Ausführungsform der Erfindung ist in den folgenden Zeichnungen dargestellt. Es zeigen:
- Fig. 1: eine Draufsicht auf einen erfindungsgemäßen Schneideinsatz;
- Fig. 2: einen Querschnitt durch den Schneideinsatz nach Fig. 1 entlang der Schnittlinie A-A;
- Fig. 3: ein Detail des Querschnitts nach Fig. 2;
- Fig. 4: ein Detail des Ausschnitts nach Fig. 3;
- Fig. 5: ein Detail eines Längsschnittes durch den Schneideinsatz nach Fig. 1;
- Fig. 6: eine isometrische Darstellung des Schneideinsatzes nach Fig. 1 bis 5.

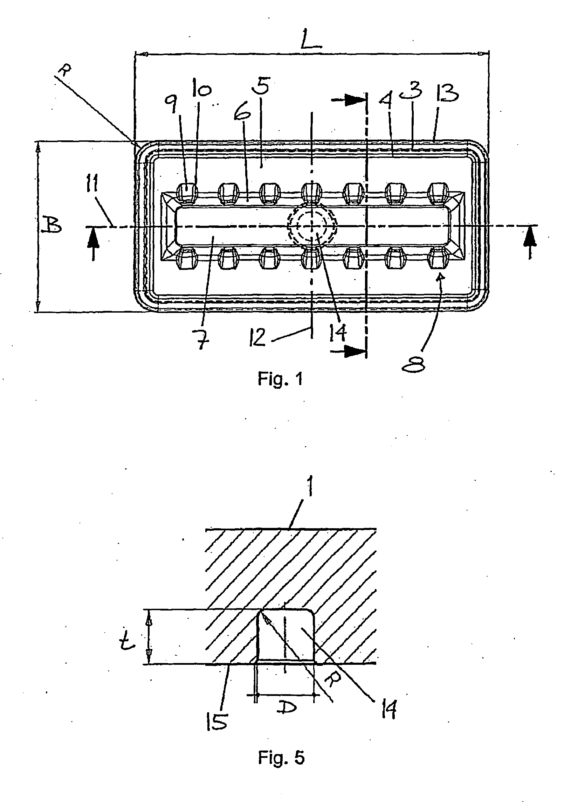

Der in den Fig. 1 bis 6 dargestellte Schneideinsatz besitzt eine rechteckige Grundform, mit zwei sich jeweils gegenüberliegenden langen und zwei kurzen Schneidkanten, wobei die Schneidkantenecken gerundet sind. Das Verhältnis der langen Schneidkanten zu den kurzen beträgt 2:1, wobei der Schneideinsatz insgesamt eine Länge L von etwa 50 mm, eine Breite B von etwa 25,5 mm und eine Gesamthöhe H von etwa 14,5 mm aufweist. Je nach Einsatzbedingungen können die Abmessungen des Schneideinsatzes jedoch variieren.

Entlang der Schneidkanten ist umlaufend in gleich bleibender Breite eine Fase 13 angeordnet, wobei die Breite c der Fase 13 in der Spanflächenebene 0,5 mm beträgt. Der Neigungswinkel γ, der die Neigung der Fase 13 gegenüber einem unter einem Spanwinkel von 0° angeordneten, ebenen Spanflächenabschnitt 3 angibt, beträgt 15°.

Der unter einem Spanwinkel von 0° angeordnete, ebene Spanflächenabschnitt 3 schließt an die Fase 13 an und weist umlaufend eine Breite d von 0,85 mm auf. Von diesem Abschnitt aus fällt die Spanfläche 1 über geneigte Wandabschnitte 4 auf einen horizontalen Spanformgrund 5 ab, um sich zur Mitte hin über ebenfalls geneigte Wandabschnitte 6 zu einem zentral gelegenen Spanflächenplateau 7 zu erheben. Die Neigungen α, α' der Wandabschnitte 4 und 7 in Bezug auf die horizontale Ebene des Spanformgrundes betragen jeweils 30°.

Die Seitenkanten des Spanflächenplateaus 7 verlaufen parallel zu den Schneidkanten des Schneideinsatzes. Das Spanflächenplateau ist zudem symmetrisch in Bezug auf die jeweiligen Schneidkanten-Mittelsenkrechten 11, 12 angeordnet. Der Abstand des Spanflächenplateaus 7 zu den kurzen Schneidkanten ist jedoch geringer als zu den langen Schneidkanten des Schneideinsatzes, so dass sich ein umlaufender, unterschiedlich breiter Spanformgrund ergibt. Die Breite b des Spanformgrundes, d.h. der Bereich über den sich der Spanformgrund 5 zwischen den Wandabschnitten 4 und 6 erstreckt, beträgt vor den Längsseiten des Spanflächenplateaus 5,8 mm und vor den Querseiten 1,8 mm. Gegenüber dem unter einem Spanwinkel von 0° angeordneten Spanflächenabschnitt 3 ist der Spanformgrund 5 um das Maß a = 0,5 mm abgesenkt.

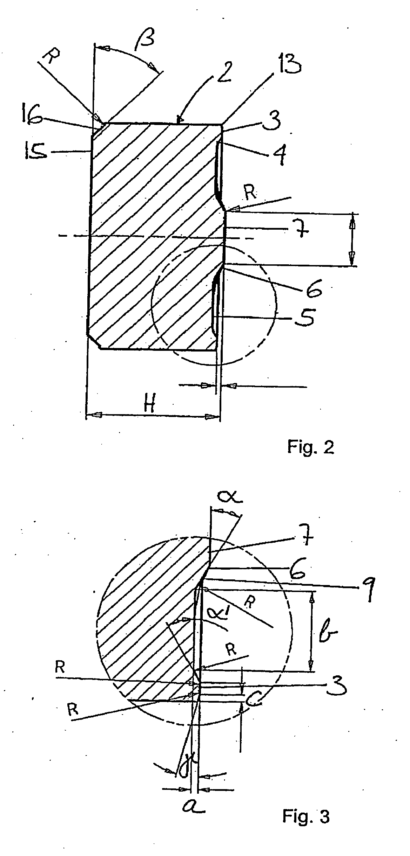

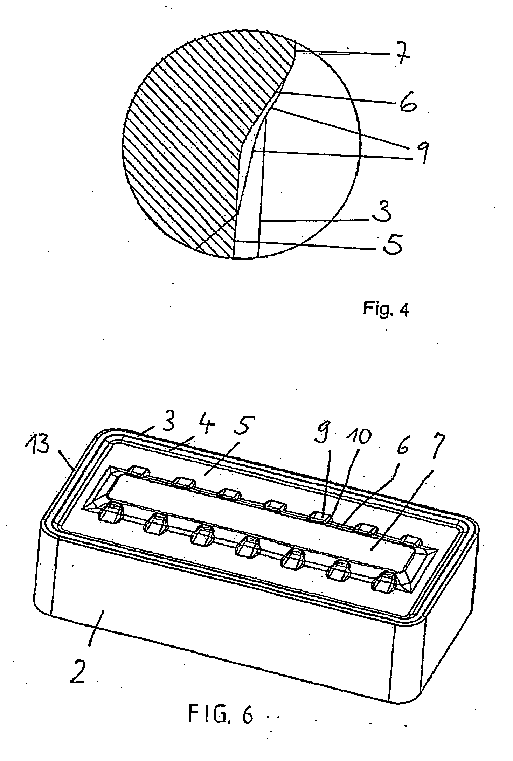

Den beiden langen geneigten Wandabschnitten 6 des Spanflächenplateaus 7 sind 7 gleich breite und gleich lange Spanformelemente 8 jeweils im Achsabstand von 6,0 mm vorgelagert, die in den Spanformgrund 5 hineinragen. Die Anordnung der Spanformelemente 8 in Bezug auf die Mittelsenkrechten 11, 12 ist wiederum symmetrisch. Den kurzen geneigten Wandabschnitten 6 des Spanflächenplateaus 7 sind keine Spanformelemente 8 vorgelagert. Wie aus Fig. 3 und 4 ersichtlich weist jedes Spanformelement 8 eine im unteren Bereich um 15° und im oberen Bereich um 30° gegenüber dem Spanformgrund 5 geneigte Dachfläche 9 und geneigte seitliche Flanken 10 auf. Die Flanken 10 der Spanformelemente 5 weisen einen Freiwinkel von 10° bis 30° auf, wobei die Kanten zu der Dachfläche 9 und zu dem Spanformgrund 5 sowie zum Wandabschnitt 6 gleich oder verschieden groß verrundet sind. Die Verrundung sollte zwischen 0,2 und 1,2 mm liegen. Projiziert auf die Fläche des Spanformgrundes 5 ragt jede Dachfläche 1,7 mm in den Spanformgrund 5 hinein.

Die Breite der Dachfläche 9 eines Spanformelementes 8 beträgt 1,65 mm. Im Bereich des Anschlusses an den Wandabschnitt 6 weist die Dachfläche 9 eine geringere Breite auf, indem die seitlichen Flanken 10 geringfügig eingerückt sind. Auch die Dachfläche 9 ist in diesem Bereich geringfügig eingerückt, so dass ein Absatz entsteht. Die größte Breite der Spanformelemente kann (in Abhängigkeit von der Dachflächenbreite) bis zu 4,5 mm betragen.

Der Fig. 1 ist ferner eine zentrale, kreisrunde Ausnehmung 14 in der Auflagefläche 15 zu entnehmen, d.h. der Fläche, die der Spanfläche 1 gegenüberliegt. Die Ausnehmung 14 dient der Aufnahme einer Befestigungsvorrichtung. Der Durchmesser D der Ausnehmung 14 beträgt etwa 6,5 mm, die Tiefe t beträgt etwa 6 mm (vgl. Fig. 4).

In Fig. 1 ist darüber hinaus der Abstand A zu erkennen, der zwischen den kurzen Wandabschnitten und dem ersten Spanformelement ist.

Wie aus Fig. 2 ersichtlich weist der Schneideinsatz rückseitig eine umlaufende Abschrägung 16 auf, wobei der Neigungswinkel β in Bezug auf die Auflagefläche 15 45° beträgt.

Die isometrische Darstellung in Fig. 6 zeigt deutlich das den Spanablauf und die Spanformung bestimmende Profil der Spanfläche 1. Es gewährleistet eine gezielte Spanformung über den gesamten Einsatzbereich des Schneideinsatzes. Die Schneidkantengeometrie wird im Wesentlichen durch die Fase 13, den unter einem Spanwinkel von 0° angeordneten Spanflächenabschnitt 3 und die auf den Spanformgrund 5 abfallenden Wandflächen 4 sowie die erhabenen Spanformelemente bestimmt. Sie zeichnet sich durch eine hohe Verschleißresistenz aus, eine Eigenschaft die gerade im Bereich der Schwerzerspanung von besonderer Bedeutung ist.

## Patentansprüche

1. Schneideinsatz für die spanbildende Bearbeitung dessen mindestens einseitige Deckfläche die Spanfläche (1) und dessen umlaufende, im rechten Winkel zueinander stehenden, ebenen Seitenflächen die Freiflächen (2) bilden, wobei die Spanfläche nach einem an die Freiflächen angrenzenden, unter einem Spanwinkel von 0° angeordneten, ebenen Spanflächenabschnitt (3), über abfallende ebene Wandabschnitte (4) in einen tiefer liegenden, ebenen Spanformgrund (5) ausläuft und zur Mitte hin über ansteigende ebene Wandabschnitte (6) zu einem zentral gelegenen, ebenen Spanflächenplateau (7) ansteigt,
**dadurch gekennzeichnet, dass**
an zwei sich gegenüberliegenden, ansteigenden Wandabschnitten (6) des Spanflächenplateaus (7) mehrere erhabene Spanformelemente (8) parallel und im gleichen Abstand zueinander angeordnet sind, die eine zum Spanformgrund (5) abfallende Dachfläche (9) und abfallende Flanken (10) aufweisen.

2. Schneideinsatz nach Anspruch 1, **dadurch gekennzeichnet, dass** das Spanflächenplateau (7) und die Spanformelemente (8) spiegelsymmetrisch in Bezug auf die jeweiligen Schneidkanten-Mittelsenkrechten (11, 12) angeordnet sind.

3. Schneideinsatz nach Anspruch 1 oder 2, **dadurch gekennzeichnet, dass** das Spanflächenplateau auf Schneidkantenhöhe liegt oder das Spanflächenplateau (7) die Ebene, in der die Schneidkanten liegen, überragt.

4. Schneideinsatz nach einem der Ansprüche 1 bis 3, **dadurch gekennzeichnet, dass** die Dachflächen (9) der Spanformelemente (8) unterhalb der Ebene des Spanflächenplateaus (7) ansetzen.

5. Schneideinsatz nach einem der Ansprüche 1 bis 4, **dadurch gekennzeichnet, dass** die Dachflächen (9) der Spanformelemente (8) Rampen bilden, die eine geringere Neigung, vorzugsweise eine Neigung ≤ 15°, und/oder in Teilbereichen die gleiche Neigung aufweisen als die abfallenden ebenen Wandabschnitte (6) des Spanflächenplateaus (7), welche in einem Winkel α von 20° bis 40°, vorzugsweise 30°, gegenüber dem Spanformgrund (5) geneigt sind.

6. Schneideinsatz nach einem der Ansprüche 1 bis 5, **dadurch gekennzeichnet, dass** die im Abstand zu den Schneidkanten angeordneten, abfallenden ebenen Wandabschnitte (4) in einem Winkel α' von 20° bis 40°, vorzugsweise 30°, gegenüber dem Spanformgrund (5) geneigt sind.

7. Schneideinsatz nach einem der Ansprüche 1 bis 6, **dadurch gekennzeichnet, dass** der Spanformgrund (5) um ein Maß a von 0,4 mm bis 0,6 mm, vorzugsweise 0,5 mm, gegenüber dem unter einem Spanwinkel von 0° angeordneten Spanflächenabschnitt (3) abgesenkt ist.

8. Schneideinsatz nach einem der Ansprüche 1 bis 7, **dadurch gekennzeichnet, dass** die in den Spanformgrund (5) hineinragenden Spanformelemente (8) sich maximal über die Hälfte der Breite b der Spanformgrundfläche erstrecken, vorzugsweise erstrecken sich die Spanformelemente (8) über ein Viertel der Breite b der Spanformgrundfläche.

9. Schneideinsatz nach einem der Ansprüche 1 bis 8, **dadurch gekennzeichnet, dass** der Abstand der Spanformelemente (8) zueinander das 0,75-fache bis 1,5-fache der Breite der Dachfläche (9) beträgt.

10. Schneideinsatz nach einem der Ansprüche 1 bis 9, **dadurch gekennzeichnet, dass** entlang der Schneidkanten eine umlaufende Fase (13) angeordnet ist, deren Breite c in der Spanflächenebene 0,4 mm bis 0,6 mm, vorzugsweise 0,5 mm, beträgt und die gegenüber dem unter einem Spanwinkel von 0° angeordneten Spanflächenabschnitt (3) der Spanfläche (1) um einen Winkel γ von 10° bis 20°, vorzugsweise 15°, geneigt ist.

11. Schneideinsatz nach einem der Ansprüche 1 bis 10, **dadurch gekennzeichnet, dass** der Schneideinsatz zwei längere Schneidkanten besitzt und, dass die erhabenen Spanformelemente (8) ausschließlich parallel zu den längeren Schneidkanten angeordnet sind.

## Claims

1. Cutting insert for chip-forming machining, of which at least the top surface, on one side, constitutes the rake face (1) and the periferically planar side surfaces, which are located at right angles to one another, constitute the clearance faces (2), wherein, after a planar rake face portion (3) that is adjacent to the clearance face is arranged at a rake angle of 0°, the rake face tapers, via downwardly sloping planar wall portions (4), into a lower-level, planar chip-forming base (5) and, in the direction of the center, it slopes up, via upwardly sloping planar wall portions (6), to a centrally located, planar face plateau (7),
**characterized in that**
a plurality of raised chip-forming elements (8) are arranged parallel to one another, and at equal spacings, on two mutually opposite, upwardly sloping wall portions (6) of the rake face plateau (7), which chip-forming elements have a top surface (9), which slopes downwards to the chip-forming base (5), and downwardly sloping flanks (10).

2. Cutting insert according to claim 1, **characterized in that** the rake face plateau (7) and the chip-forming elements (8) are arranged in mirror symmetry in relation to the respective cutting-edge mid-perpendiculars (11, 12).

3. Cutting insert according to claim 1 or 2, **characterized in that** the face plateau is located at the cutting-edge height or the face plateau (7) projects over the plane in which the cutting edges are located.

4. Cutting insert according to one of the claims 1 to 3, **characterized in that** the top surfaces (9) of the chip-forming elements (8) begin below the plane of the face plateau (7).

5. Cutting insert according to one of the claims 1 to 4, **characterized in that** the top surfaces (9) of the chip-forming elements (8) constitute ramps that have a lesser inclination than, preferably an inclination ≤ 15°, and/or in partial regions the same inclination as, the downwardly sloping planar wall portions (6) of the face plateau (7) that are inclined at an angle α of 20° to 40°, preferably 30°, relative to the chip-forming base (5).

6. Cutting insert according to one of claims 1 to 5, **characterized in that** the downwardly sloping planar wall portions (4) arranged at a distance from the cutting edges are inclined at an angle α' of 20° to 40°, preferably 30°, relative to the chip-forming base (5).

7. Cutting insert according to one of claims 1 to 6, **characterized in that** the chip-forming base (5) is lower by a dimension a of 0.4 mm to 0.6 mm, preferably 0.5 mm, than the planar rake face portion (3) arranged at a rake angle of 0°.

8. Cutting insert according to one of claims 1 to 7, **characterized in that** the chip-forming elements (8) projecting into the chip-forming base (5) extend maximally over half of the width b of the chip-forming base surface, the chip-forming elements (8) preferably extending over a quarter of the width b of the chip-forming base surface.

9. Cutting insert according to one of claims 1 to 8, **characterized in that** the spacing of the chip-forming elements (8) in relation to one another is 0.75 to 1.5 times the width of the top surface (9).

10. Cutting insert according to one of claims 1 to 9, **characterized in that** arranged along the cutting edges there is a circumferential chamfer (13) whose width c in the face plane is 0.4 mm to 0.6 mm, preferably 0.5 mm, and which is inclined by an angel γ of 10° to 20°, preferably 15°, relative to the rake face portion (3) of the face (1) arranged at a rake angle of 0°.

11. Cutting insert according to one of claims 1 to 10, **characterized in that** the cutting insert has two longer cutting edges, and that the raised chip-forming elements (8) are arranged exclusively parallel to the longer cutting edges.

## Revendications

1. Insert de coupe pour l'usinage avec formation de copeaux, dont la surface supérieure à au moins une face forme la face de coupe (1) et dont les faces latérales planes périphériques situées à angle droit les unes par rapport aux autres forment les faces de dépouille (2), dans lequel, suite à une section plane de face de coupe (3) contiguë aux faces de dépouille et disposée à un angle de coupe de 0° ainsi que via des sections de parois (4) planes allant en descendant, la face de coupe se termine dans un fond plan à former les copeaux (5) situé plus bas et va en montant en direction du milieu, via des sections de parois (6) planes qui vont en montant, vers un plateau de face de coupe (7) plan situé au centre,
**caractérisé par le fait**
**qu'**une pluralité d'éléments élevés à former les copeaux (8) sont disposés parallèlement entre eux et à distance égale les uns des autres sur deux sections de parois (6) du plateau de face de coupe (7) situées en regard l'une de l'autre et allant en montant, lesdits éléments à former les copeaux présentant une surface supérieure (9) allant en descendant vers ledit fond à former les copeaux (5) ainsi que des flancs (10) allant en descendant.

2. Insert de coupe selon la revendication 1, **caractérisé par le fait que** ledit plateau de face de coupe (7) et les éléments à former les copeaux (8) sont disposés à symétrie spéculaire par rapport aux médiatrices respectives de tranchant (11, 12).

3. Insert de coupe selon la revendication 1 ou 2, **caractérisé par le fait que** le plateau de face de coupe est situé au niveau des tranchants ou que le plateau de face de coupe (7) dépasse le plan dans lequel sont situés les tranchants.

4. Insert de coupe selon l'une quelconque des revendications 1 à 3, **caractérisé par le fait que** les surfaces supérieures (9) des éléments à former les copeaux (8) commencent au-dessous du plan du plateau de face de coupe (7).

5. Insert de coupe selon l'une quelconque des revendications 1 à 4, **caractérisé par le fait que** les surfaces supérieures (9) des éléments à former les copeaux (8) forment des rampes qui présentent une inclinaison inférieure à celle des sections de parois (6) planes allant en descendant du plateau de face de coupe (7), de préférence une inclinaison ≤ 15°, et/ou, dans des zones partielles, la même inclinaison que celles-ci qui sont inclinées à un angle α compris entre 20° et 40°, de préférence de 30°, par rapport audit fond à former les copeaux (5).

6. Insert de coupe selon l'une quelconque des revendications 1 à 5, **caractérisé par le fait que** les sections de parois (4) planes allant en descendant et espacées des tranchants sont inclinées à un angle α' compris entre 20° et 40°, de préférence de 30°, par rapport au fond à former les copeaux (5).

7. Insert de coupe selon l'une quelconque des revendications 1 à 6, **caractérisé par le fait que** ledit fond à former les copeaux (5) est abaissé d'une mesure a comprise entre 0,4 mm et 0,6 mm, de préférence de 0,5 mm, par rapport à la section de face de coupe (3) disposée à un angle de coupe de 0°.

8. Insert de coupe selon l'une quelconque des revendications 1 à 7, **caractérisé par le fait que** les éléments à former les copeaux (8) se projetant dans ledit fond à former les copeaux (5) s'étendent au maximum sur la moitié de la largeur b de la surface du fond à former les copeaux, de préférence les éléments à former les copeaux (8) s'étendent sur un quart de la largeur b de la surface du fond à former les copeaux.

9. Insert de coupe selon l'une quelconque des revendications 1 à 8, **caractérisé par le fait que** la distance séparant entre eux les éléments à former les copeaux (8) est comprise entre 0,75 fois et 1,5 fois la largeur de la surface supérieure (9).

10. Insert de coupe selon l'une quelconque des revendications 1 à 9, **caractérisé par le fait qu'**un chanfrein périphérique (13) est disposé le long des tranchants, dont la largeur c dans le plan de la face de coupe est comprise entre 0,4 mm et 0,6 mm, de préférence de 0,5 mm, et qui est incliné d'un angle γ compris entre 10° et 20°, de préférence de 15°, par rapport à la section de face de coupe (3) de la face de coupe (1), qui est disposée à un angle de coupe de 0°.

11. Insert de coupe selon l'une quelconque des revendications 1 à 10, **caractérisé par le fait que** ledit insert de coupe présente deux tranchants plus longs et que les éléments élevés à former les copeaux (8) sont disposés exclusivement de façon parallèle auxdits tranchants plus longs.
